Europäisches Patentamt

European Patent Office

Office européen des brevets

(11) Publication number: **0 382 952**
**A1**

# EUROPEAN PATENT APPLICATION

(21) Application number: **89301326.8**

(51) Int. Cl.5: **A01D 87/12**

(22) Date of filing: **13.02.89**

(43) Date of publication of application:
**22.08.90 Bulletin 90/34**

(84) Designated Contracting States:
**AT BE CH DE ES FR GR IT LI LU NL SE**

(71) Applicant: **Foster, John**
**Cleveland Street**
**Darlington County Durham DL1 2PB(GB)**

(72) Inventor: **Foster, John**
**Cleveland Street**
**Darlington County Durham DL1 2PB(GB)**

(74) Representative: **Orr, William McLean**
**URQUHART-DYKES & LORD 5th Floor, Tower**
**House Merrion Way**
**Leeds West Yorkshire, LS2 8PA(GB)**

(54) **Mobile bale handler.**

(57) There is disclosed a mobile bale handler (10) having a rigid support frame and means mounted on the frame for engaging a bale lying on the ground and operable to raise an engaged bale to a transport position. The bale handler comprises a generally U-shaped cradle (11) having a base (12) and a pair of substantially parallel limbs (13) projecting therefrom in order to define a bale-receiving region (14) in which a bale (15) can be received, ground wheels (16) mounted on the limbs (13), a draw bar (17), an upstanding bale support structure (19) mounted on the cradle (11) and carrying a spike (21) for engaging a bale, and a power operated device in the form of a ram having a line of action (23) which can be operated to adjust the support structure (19) between an upright bale-engaging position in which the spike (21) extends substantially horizontally and a tilted transport position in which the weight of a pierced bale is borne by the support structure.

FIG. 2

## MOBILE BALE HANDLER

This invention relates to a mobile bale handler for engaging a compressed bale of straw or hay lying on the ground, and for lifting the engaged bale to a transport position on the bale handler.

The invention has been developed primarily, though not exclusively, in connection with a bale handler for transporting so-called "round" or big bales, which are being produced to an ever increasing extent by farmers in this country and abroad. As is well known, round bales are very densley packed by a baler into a cylindrical form, and are then deposited onto a field for subsequent collection. Necessarily, these bales, which typically have a diameter of up to 4 or 5 feet, are very heavy and are therefore not easy to manhandle.

Therefore, one method which is presently adopted to collect round bales which are being deposited on a field is to fix a sturdy horizontal spike, fore and aft of a tractor, and then to drive each spike in turn into a respective bale. The tractor, loaded with bales fore and aft, then travels from the field where the bales were collected to an undercover store or to a work station at which bale wrapping can take place.

The use of tractors for this task is not a very economical use of a high capital cost item, and also takes up the time of a skilled operator (a tractor driver). In order to collect all of the bales which have been deposited on a field, a considerable number of journeys have to be made, to and fro between the field and the store.

There would be evident advantage in finding a relatively simple (and therefore inexpensive) construction of bale handling apparatus which can be used for the task of picking-up round bales deposited on a field, and then transporting these bales to a central depot.

There are being used increasingly on farms so-called tractor cycles or ATC's, which form a cheap but rugged means of transport about a farm and which enable the rider to travel over rough ground. The invention has therefore been developed with a view to providing a bale handler which can be propelled by such vehicles, though it should be understood that the bale handler of the invention may also be propelled by other types of propelling vehicle normally available on a farm e.g. tractors, land rovers or vans.

According to the invention there is provided a mobile bale handler having a rigid support frame and means mounted on said frame for engaging a bale lying on the ground and operable to raise an engaged bale to a transport position, said bale handler comprising:
a generally U-shaped cradle having a base and a pair of substantially parallel limbs projecting in one direction from the base and defining a bale receiving region;
ground wheels mounted on said limbs;
a drawbar secured to said base and extending in an opposite direction therefrom;
an upstanding bale support structure adjustably mounted on the cradle and carrying a spike for engaging a bale lying on the ground, said support structure being adjustable between an upright bale-engaging position in which it extends upwardly from said base and said spike extends substantially horizontally therefrom to be able to pierce a bale lying on the ground upon relative movement of the cradle towards the bale, and a tilted transport position in which the weight of the pierced bale is borne by the support structure; and
a power-operated device mounted on the frame and connected to the support structure, said device being operable to move the support structure between its bale-engaging position and its transport position.

Thus, in use, the bale handler can be propelled rearwardly by a towing vehicle coupled to the drawbar, with the support structure in its bale-engaging position, so that the spike pierces the bale substantially centrally thereof. The bale is readily able to be received in the bale-receiving region defined between the limbs and the base of the cradle, and the support structure is then tilted to its transport position by operation of the power operated device. This transport position is a stable position, in which the weight of the bale, which is quite substantial, is borne initially by the support structure and is then transferred to the rigid support frame via the cradle, and hence mainly to the wheels. Some of the load of the bale is transmitted to a towing hitch on the towing vehicle via the drawbar, but by suitable dimensioning of the length of the drawbar and positioning of the wheels on the limbs relative to the cradle, it can be arranged that any desired proportion, usually a major proportion, of the weight of the bale can be borne by the wheels. This will then enable relatively lightweight propelling vehicles to be used for coupling with the drawbar, such as tractor cycles (ATC's).

The bale handler according to the invention can be of relatively simple yet sturdy construction, and can be supplied relatively cheaply, and particularly lends itself to propulsion by less sophisticated vehicles than tractors and the like.

Preferably, the support structure is pivotally mounted on the cradle, and the power operated device may comprise a fluid operated ram which extends between an anchor point on the drawbar and a coupling point at or near the upper end of the support structure.

The support structure conveniently may take the form of a mast-type structure, suitably strengthened at its base, and through which a spike can be taken for rigid mounting therein.

To prevent any tendency for a bale to rotate on the spike, particularly when the bale has not been pierced centrally, more than one spike may be mounted on the mast structure, to pierce the bale.

A bale handler according to the invention is particularly suitable for use in engaging and then lifting a round bale to a transport position.

The fluid operated ram conveniently is provided with a supply of fluid pressure medium from a pump module mounted on the drawbar or the cradle. Conveniently, the power module is electrically operated, and is arranged to be capable of being powered from the battery of the towing vehicle, upon completion of a simple electrical connection therewith.

One embodiment of mobile bale handler according to the invention will now be described in detail, by way of example only, with reference to the accompanying drawings, in which:

Figure 1 is a schematic side view of an embodiment of mobile bale handler according to the invention, in the form of a towable trailer;

Figure 2 is a schematic plan view corresponding to Figure 1; and,

Figure 3 is a detail schematic side view of part of the mobile bale handler of Figures 1 and 2.

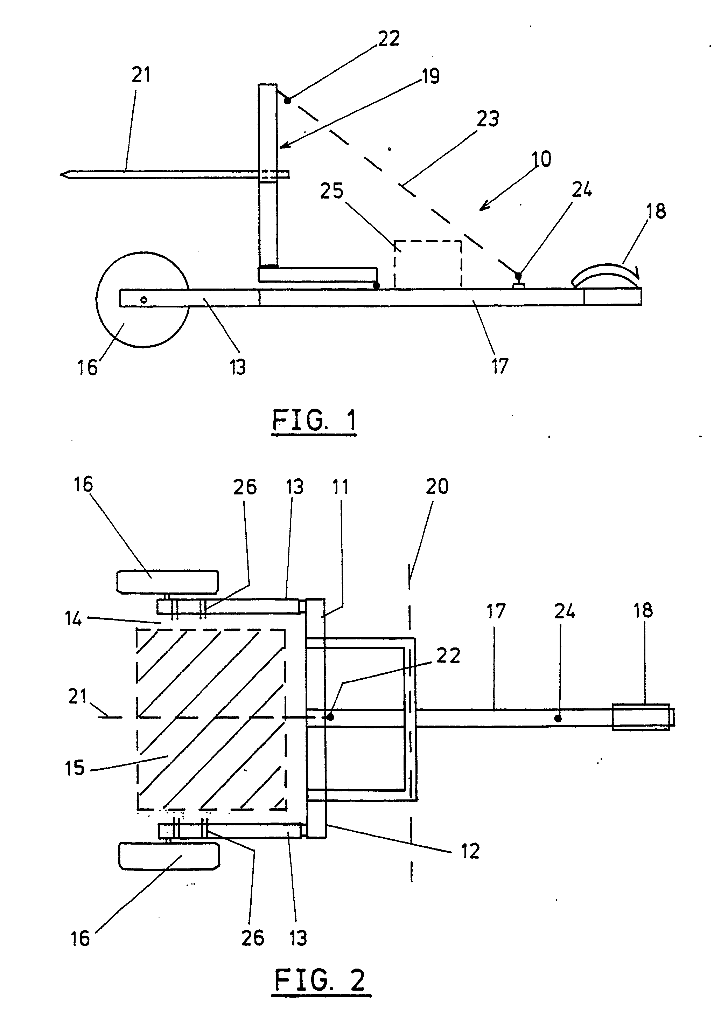

Referring now to Figures 1 to 3 of the drawings, a mobile bale handler according to the invention is designated generally by reference 10, and has a rigid support frame and means mounted on said frame for engaging a bale lying on the ground and operable to raise an engaged bale to a transport position.

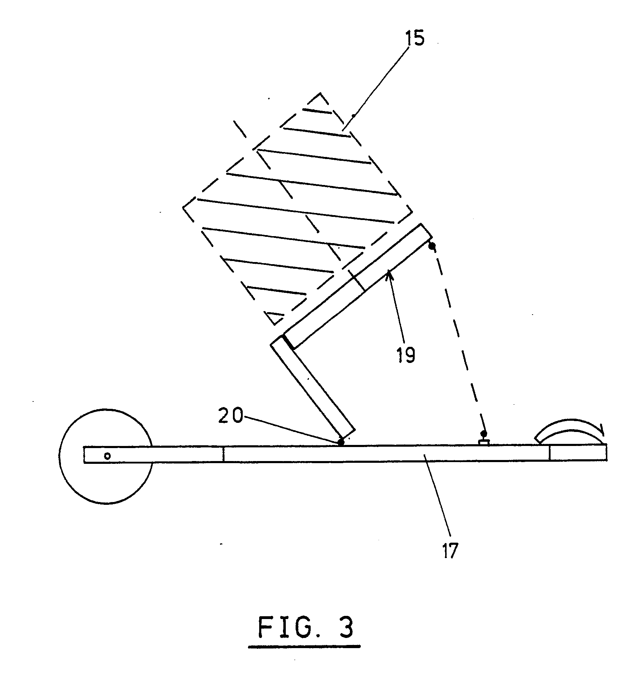

The bale handler 10 comprises a generally U-shaped cradle 11 having a base 12 and a pair of substantially parallel limbs 13 projecting in one direction from the base 12 and defining a bale-receiving region 14 in which a bale 15, shown in dashed outline in Figure 2, can be received. Ground wheels 16 are mounted on the limbs 13, and a drawbar 17 is secured to the base 12 and extends in an opposite direction therefrom, the drawbar 17 having a suitable coupling hitch 18 for attaching the bale handler 10 to a ball-type coupling (not shown) of a towing vehicle.

An upstanding bale support structure 19 is adjustably mounted on the cradle 11 by being mounted for pivotable movement about a pivot axis 20, and carries one or more spikes 21 for engaging a bale lying on the ground. The support structure 19 is adjustable between an upright bale-engaging position, as shown in Figures 1 and 2, in which it extends upwardly from the base 12 and the spike 21 extends substantially horizontally so as to be able to pierce a bale lying on the ground upon relative movement of the cradle 11 towards the bale, and a tilted transport position, as shown in Figure 3, in which the weight of the pierced bale 15 is borne by the support structure 19.

A power operated device (not shown in detail) is mounted on the frame of the bale handler 10, and is connected via a pivot 22 to the upper end of the support structure 19, the device being operable to move the support structure 19 between its upright bale-engaging position shown in Figures 1 and 2 and its transport position shown in Figure 3.

The power operated device preferably takes the form of a fluid operated ram, having a line of action 23 between pivot 22 and a pivot 24 on the drawbar 17. A power supply module 25 is mounted on the frame, and is electrically operated from the battery supply of the towing vehicle by a suitable electrical connection (not shown). When the power operated device takes the form of a pneumatic or hydraulic ram, the module 25 will include an electrically operated pump for supplying pressurised fluid to the ram.

In use of the bale handler, it will be coupled up via coupling 18 to a suitable coupling hitch of a towing vehicle, such as a tractor cycle or ATC, and can then be reversed, with the upright structure 19 in the position shown in Figures 1 and 2, so that the spike 21 can pierce substantially the central region of a round bale lying on a field, and then the power operated device is operated so as to lift the engaged bale 15 to the transport position shown in Figure 3. This is a stable position, in which the major part of the weight of the bale, borne by the structure 19, is transmitted through the frame to the wheels 16. To permit adjustment of the weight transfer to the wheels 16, according to any particular size of bale, adjustable mountings 26 are provided which are movable along the length of the limbs 13, to suit requirements.

The position of the power supply module 25 is not critical, and it may be mounted on the frame, as shown in the drawings, or may be arranged on the frame forwardly of the support structure 19.

## Claims

1. A mobile bale handler having a rigid support frame and means mounted on said frame for engaging a bale lying on the ground and operable to raise an engaged bale to a transport position, said bale handler comprising:
a generally U-shaped cradle having a base and a pair of substantially parallel limbs projecting in one direction from the base and defining a bale receiving region;

ground wheels mounted on said limbs;

a draw bar secured to said base and extending in an opposite direction therefrom;

an upstanding bale support structure adjustably mounted on the cradle and carrying a spike for engaging a bale lying on the ground, said support structure being adjustable between an upright bale-engaging position in which it extends upwardly from said base and said spike extends substantially horizontally therefrom to be able to pierce a bale lying on the ground upon relative movement of the cradle towards the bale, and a tilted transport position in which the weight of the pierced bale is borne by the support structure; anhd,

a power-operated device mounted on the frame and connected to the support structure, said device being operable to move the support structure between its bale-engaging position and its transport position.

2. A bale handler according to Claim 1, in which the support structure is pivotally mounted on the cradle.

3. A bale handler according to Claim 1 or 2, in which the power operated device comprises a fluid operated ram which extends between an anchor point on the draw bar and a coupling point at or near the upper end of the support structure.

4. A bale handler according to any one of the preceding claims, in which the support structure takes the form of a mast-type structure upon which the spike is rigidly mounted.

5. A bale handler according to any one of the preceding claims, including more than one spike mounted on the support structure.

6. A bale handler according to Claim 3, or Claim 4 or 5 when appendant to Claim 3, in which the fluid operated ram is arranged to be provided with a supply of fluid pressure medium from a pump module mounted on the draw bar or the cradle.

7. A bale handler according to Claim 6, in which the power module is electrically operable, and is arranged to be capable of being powered from the battery of a towing vehicle to be coupled with the bale handler.

8. A bale handler according to Claim 1 and substantially as hereinbefore described 'with reference to, and as shown in the accompanying drawings.

FIG. 1

FIG. 2

15

19

20

17

FIG. 3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | US-A-4527935 (FORTENBERRY)<br>* column 2, line 47 - column 8, line 9; figures 1-7 * | 1, 2, 4, 5, 7, 8 | A01D87/12 |
| X | US-A-3949706 (COON)<br>* column 2, line 36 - column 5, line 7; figures 1, 2, 3 * | 1, 2, 3, 5, 6, 8 | |
| X | GB-A-2203119 (VENNALL)<br>* page 2, line 25 - page 5, line 21; figures 1-5 * | 1, 2, 4, 5, 8 | |
| X | US-A-4348143 (HEDGESPETH)<br>* column 2, lines 4 - 55; figures 1-4 * | 1, 2, 4, 5 | |
| X | US-A-4023693 (PRIEFERT)<br>* column 2, line 61 - column 8, line 68; figures 1-25 * | 1, 2, 5 | |

TECHNICAL FIELDS SEARCHED (Int. Cl.5 )

A01D

The present search report has been drawn up for all claims

| Place of search | Date of completion of the search | Examiner |
|---|---|---|
| THE HAGUE | 18 OCTOBER 1989 | VERMANDER R.H. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)